# EUROPÄISCHE PATENTANMELDUNG

(11) **EP 4 684 888 A1**
(43) Veröffentlichungstag der Anmeldung: **28.01.2026**
(21) Anmeldenummer: 25189801.1
(22) Anmeldetag: 16.07.2025
(51) Int. Cl.: B07B 1/44, B07B 1/46, F16F 15/08, B07B 1/00, F16F 1/38, F16F 1/50

(54) **SIEBMASCHINE**

(30) Priorität: 23.07.2024 DE 102024120878
(71) Anmelder: KLEEMANN GMBH, 73037 Göppingen (DE)
(72) Erfinder: NÄGELE, Florian, 89185 Hüttisheim (DE)
(74) Vertreter: Herrmann, Jochen

(57) **Zusammenfassung**

Die Erfindung betrifft eine Siebmaschine (10) zum Sieben und Klassieren von mineralischem Stückgut, insbesondere Gesteinsmaterial, oder Recyclingmaterial mit einem Chassis (11), an dem ein Siebträger, insbesondere ein Siebkasten (60) befestigt ist, wobei an dem Siebträger wenigstens einen Siebbelag (20) auswechselbar befestigt ist, wobei zwischen dem Siebträger und dem Maschinenchassis (11) wenigstens ein Schwingungsdämpfer (70) wirksam ist. Zur Verbesserung der Betriebssicherheit einer solchen Siebmaschine ist es erfindungsgemäß vorgesehen, dass der Schwingungsdämpfer (70) zwei Koppelstücke (71, 72) aufweist, wobei ein Koppelstück (72) mit dem Maschinenchassis (11) und das andere Koppelstück (71) mit dem Siebträger mittelbar oder unmittelbar verbunden ist, wobei mit beiden Koppelstücken (71, 72) jeweils ein Dämpfungshebel (74, 75) schwenkbar verbunden ist, wobei die Dämpfungshebel (74, 75) jeweils den Koppelstücken (71, 72) abgekehrt an einen Dämpfungskörper (73) angekoppelt sind, wobei im Abstandsbereich zwischen den Koppelstücken (71, 72) und dem Dämpfungskörper (73) jeweils ein Spaltbereich gebildet ist, und wobei wenigstens einer der Spaltbereiche zumindest bereichsweise mittels eines mit dem Koppelstück (71, 72) oder dem Dämpfungselement (73) verbundenen Füllstücks (80) überbrückt ist.

## Beschreibung

Die Erfindung betrifft eine Siebmaschine zum Sieben und Klassieren von mineralischem Stückgut, insbesondere Gesteinsmaterial, oder Recyclingmaterial mit einem Chassis, an dem ein Siebträger, insbesondere ein Siebkasten befestigt ist, wobei an dem Siebträger wenigstens ein Siebbelag auswechselbar befestigt ist, und wobei zwischen dem Siebträger und dem Maschinenchassis wenigstens ein Schwingungsdämpfer wirksam ist.

EP 0 238 455 A2 offenbart eine Siebmaschine mit einem Siebkasten in dem ein Siebbelag angeordnet ist. Der Siebkasten ist gegenüber dem Chassis der Siebmaschine mittels Schwingungsdämpfern in Form von Federn abgestützt. Der Siebkasten kann mittels eines Antriebs in Vibrationsbewegungen versetzt werden.

Bei solchen Siebmaschinen besteht Verletzungsgefahr, da ein Benutzer auf die Schwingungsdämpfer während des Maschinenbetriebs zugreifen und sich die Hand einklemmen kann. Es bestünde die Möglichkeit die Schwingungsdämpfer mittels einer Einhausung abzuschirmen, so dass ein Zugriff nicht mehr möglich ist. Dies hat aber den Nachteil, dass die Schwingungsdämpfer dann nicht mehr fortlaufend optisch während des Betriebs inspiziert werden können. vereinzelt sind auch Lösungen bekannt, bei denen Vorhänge vor die Schwingungsdämpfer gehängt werden, um den ungehinderten Zugang zu erschweren. Auch hier besteht der Nachteil, dass eine fortwährende Inspektion nicht gewährleistet ist. Wird eine Inspektion durchgeführt, so muss der Vorhang abgehoben werden. Dann kann wieder ungehindert auf den Schwingungsdämpfer zugegriffen werden und es besteht dann wieder Verletzungsgefahr.

Es ist Aufgabe der Erfindung, die Betriebssicherheit der eingangs beschriebenen Siebmaschine zu verbessern.

Diese Aufgabe wird mit den Merkmalen des Anspruchs 1 gelöst. Demgemäß ist es vorgesehen, dass der Schwingungsdämpfer zwei Koppelstücke aufweist, wobei ein Koppelstück mit dem Maschinenchassis und das andere Koppelstück mit dem Siebträger mittelbar oder unmittelbar verbunden ist, dass mit beiden Koppelstücken jeweils ein Dämpfungshebel schwenkbar verbunden ist, wobei die Dämpfungshebel jeweils den Koppelstücken abgekehrt an einen Dämpfungskörper angekoppelt sind, wobei im Abstandsbereich zwischen den Koppelstücken und dem Dämpfungskörper jeweils ein Spaltbereich gebildet ist, und wobei wenigstens einer der Spaltbereiche zumindest bereichsweise mittels wenigstens einem mit dem Koppelstück oder dem Dämpfungselement verbundenen Füllstück überbrückt ist.

Diese Anordnung lässt zum einen eine effektive Dämpfung der Schwingungsbewegungen zu. Die Schwingungsbewegungen werden über die gedämpft gelagerten Dämpfungshebel gedämpft. Um nun zu verhindern, dass ein Benutzer sich an dem Schwingungsdämpfer verletzt, ist der Spaltbereich zwischen dem Koppelstück und dem Dämpfungskörper mittels des Füllstücks überbrückt. Somit kann der Benutzer nicht mehr in diesen Gefahrenbereich eingreifen und sich dort die Hand einklemmen. Ein solcher Schwingungsdämpfer kann mithin optisch von außen einsehbar und arbeitssicher in den Maschinenaufbau integriert werden, sodass seine fortlaufende Inspektion möglich ist. Je nach den baulichen Gegebenheiten können selbstverständlich auch in beiden Spaltbereichen Füllstücke angeordnet sein.

Gemäß einer bevorzugten Erfindungsvariante kann es vorgesehen sein, dass das Füllstück einen Basiskörper aufweist, dass der Basiskörper eine Befestigungsfläche aufweist, und dass der Basiskörper mittels der Befestigungsfläche auf einer dem Dämpfungskörper gegenüberstehenden Seitenfläche des Koppelstücks oder einer dem Koppelstück gegenüberstehenden Seitenfläche des Dämpfungskörpers befestigt, insbesondere stoffschlüssig befestigt, ist. Es sind Maschinenaufbauten denkbar, bei denen Schwingungsdämpfer nicht oder nur schwer zugänglich sind. Diese können dann ohne Füllstück betrieben werden. Die Dämpfungselemente, welche von außen zugänglich sind, können wahlweise mit einem Füllstück ausgerüstet werden. Dies verringert den Teile- und Montageaufwand sowie den Lagerhaltungsaufwand.

Für eine passgenaue Positionierung des Füllstücks kann es vorgesehen sein, dass die Befestigungsfläche des Füllstücks in eine konkave Formschlussfläche übergeht, die einen an die Seitenfläche des Koppelelements oder des Dämpfungselements anschließenden konvexen Rundungsabschnitt zumindest bereichsweise umgreift. Darüber hinaus wird hierdurch die Lagesicherung des Füllstücks verbessert.

Eine bevorzugte Erfindungsvariante kann dergestalt sein, dass das Füllstück eine konvexe Schutzfläche aufweist, die dem Dämpfungskörper oder dem Koppelstück gegenübersteht. Während des Dämpfungsvorgangs wird der Dämpfungshebel um eine Schwenkachse geschwenkt. Dabei wird die Schutzfläche mit der im Spaltbereich gegenüberstehenden Kontur des Dämpfungskörpers oder des Koppelstücks umfahren. Die konvexe Schutzfläche kann somit angepasst an diese Bewegungskinematik geformt werden, um ein Einklemmen der Hand in den verschiedenen Schwenkstellungen des Dämpfungshebels zu verhindern.

Gemäß der Erfindung kann es vorgesehen sein, dass sich die Schutzfläche im Wesentlichen in Richtung der Schwenkachse des Dämpfungshebels erstreckt, um den Spaltbereich in Tiefenrichtung zu überbrücken.

Gemäß einer Erfindungsvariante kann es vorgesehen sein, dass in Dämpfungsrichtung des Dämpfungshebels vor der Schutzfläche eine Frontfläche angeordnet ist, die sich im Wesentlichen in Richtung der Schwenkachse des Dämpfungshebels erstreckt und die mittels eines Rundungsübergangs oder einer Fase in die Schutzfläche übergeleitet ist. Über die Frontfläche wird der Zugriff in den Spaltbereich von der Frontseite her geschützt. Zusätzlich oder alternativ kann es auch vorgesehen sein, dass in Dämpfungsrichtung des Dämpfungshebels hinter der Schutzfläche eine Rückfläche angeordnet ist, die sich im Wesentlichen in Richtung der Schwenkachse des Dämpfungshebels erstreckt und die mittels eines Rundungsübergangs in die Schutzfläche übergeleitet ist. Somit kann der rückseitige Zugriff in den Spaltbereich verhindert werden.

Gemäß der Erfindung kann der Spaltbereich abstandslos mit dem Füllstück überbrückt werden. Bevorzugt ist es jedoch vorgesehen, dass zwischen der Schutzfläche und einer gegenüberliegenden Seitenfläche des Dämpfungskörpers oder des Koppelstücks ein Abstandsbereich gebildet ist, wobei vorzugsweise vorgesehen ist, dass der Abstandsbereich über einen wesentlichen Teil der Schwenkbewegung des Dämpfungshebels mit gleichem oder veränderlichem Abstand beibehalten wird oder dass über die gesamte Schwenkbewegung des Dämpfungshebels der Abstandsbereich mit gleichem oder veränderlichem Abstand beibehalten wird. Hierdurch wird der auf die Stützfläche und damit auf das Füllstück einwirkende Verschleiß minimiert. Der Abstandsbereich kann so dimensioniert werden, dass in keinem Fall die Gefahr besteht, dass ein Finger in den Abstandsbereich gelangen kann.

Der Schwingungsdämpfer bietet bei einfachem konstruktivem Aufbau dann eine zuverlässige Funktion, wenn vorgesehen ist, dass wenigstens eines der Koppelstücke einen Hohlkörper aufweist, in dem ein Drehkörper schwenkbar angeordnet ist, dass der Drehkörper ein Lagerstück trägt oder aufweist, das den Dämpfungshebel aufnimmt, und dass in den Hohlkörper Dämpfungselemente eingesetzt sind, die den Hohlkörper gegenüber dem Drehkörper in Umfangsrichtung formschlüssig abstützen.

Denkbar ist auch eine Bauvariante des Schwingungsdämpfers, bei dem vorgesehen ist, dass der Dämpfungskörper einen Träger aufweist, der zwei Hohlkammern aufweist, dass in jeder Hohlkammer jeweils ein Drehkörper schwenkbar aufgenommen ist, dass die Drehkörper jeweils ein Lagerstück tragen oder aufweisen, dass an den Lagerstücken jeweils ein Dämpfungshebel befestigt ist und dass in den Hohlkammern Dämpfungselemente eingesetzt sind, die den Träger gegenüber den Drehkörpern in Umfangsrichtung formschlüssig abstützen.

Die Erfindung wird im Folgenden anhand von in den Zeichnungen dargestellten Ausführungsbeispielen näher erläutert. Es zeigen:
Figur 1 eine Siebmaschine in Seitenansicht,
Figur 2 in schematischer Detaildarstellung ein Siebdeck der Siebmaschine gemäß Figur 1,
Figur 3 in perspektivischer Teil-Darstellung eine Spannvorrichtung für einen Siebbelag der Siebmaschine gemäß Figur 1,
Figur 4 eine vergrößerte Detaildarstellung eines Siebkastens der Siebmaschine gemäß Figur 1 in einer ersten Montagestellung,
Figur 5 die Darstellung gemäß Figur 1 mit einem montierten Schwingungsdämpfer,
Figur 6 den Schwingungsdämpfer gemäß Figur 5 in einer vergrößerten Einzeldarstellung und in Seitenansicht,
Figur 7 den Schwingungsdämpfer gemäß Figur 6 in perspektivischer Frontansicht und
Figur 8 den Schwingungsdämpfer gemäß den Figuren 6 und 7 in perspektivischer Ansicht von hinten.

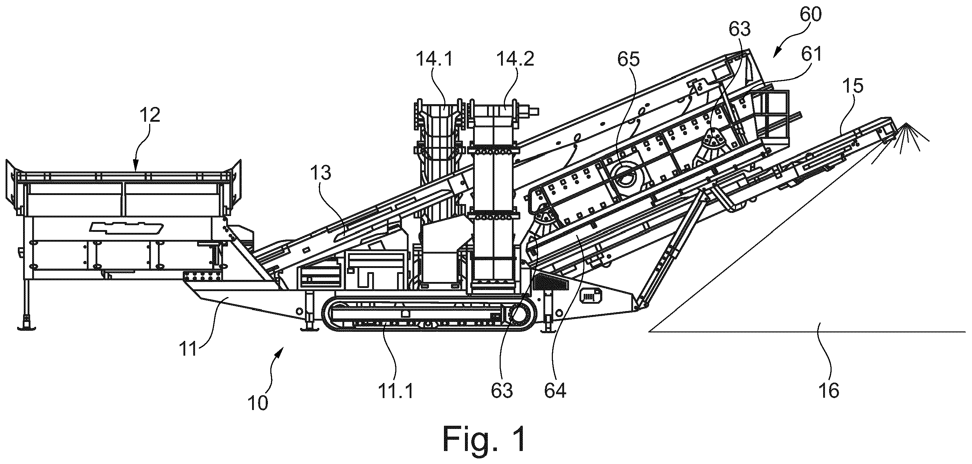

Figur 1 zeigt eine Siebmaschine 10 gemäß der Erfindung. Dabei ist diese Siebmaschine 10 als mobile Siebmaschine 10 ausgebildet. Denkbar ist es auch, dass die Erfindung bei einer stationären Siebmaschine zum Einsatz kommt. Weiterhin ist es denkbar, dass eine Siebanlage mit einer Siebmaschine 10 bei einer kombinierten Brech- und Siebanlage zum Einsatz kommt. Eine solche kombinierte Brech- und Siebanlage besitzt ein Chassis 11, auf dem eine Siebmaschine 10 und zudem auch ein Brechaggregat montiert sind. Mit dem Brechaggregat kann mineralischer Werkstoff zerkleinert werden. Der zerkleinerte Werkstoff wird dann in der Siebmaschine klassiert.

Die in Figur 1 dargestellte Siebmaschine 10 weist ein Chassis 11 auf, welches von Fahrwerken 11.1 getragen ist, um die Siebmaschine 10 verfahren zu können. Vorzugsweise weist die Siebmaschine 10 einen Aufgabetrichter 12 auf. Mittels eines Radladers kann zu siebendes Material in den Aufgabetrichter 12 eingefüllt werden.

Der Aufgabetrichter 12 weist eine Transportvorrichtung, beispielsweise eine Vibrationsrinne, ein Förderband, ein Aufgabeband, oder ein Bunkerabzugsband, auf, mittels der das aufgegebene Material hin zu einem Zuführband 13 gefördert werden kann. Das Zuführband 13 kann als endlos umlaufendes Förderband ausgebildet sein. Das Zuführband 13 fördert das zu siebende Material hin zu einer Siebvorrichtung, die einen Siebkasten 60 aufweist.

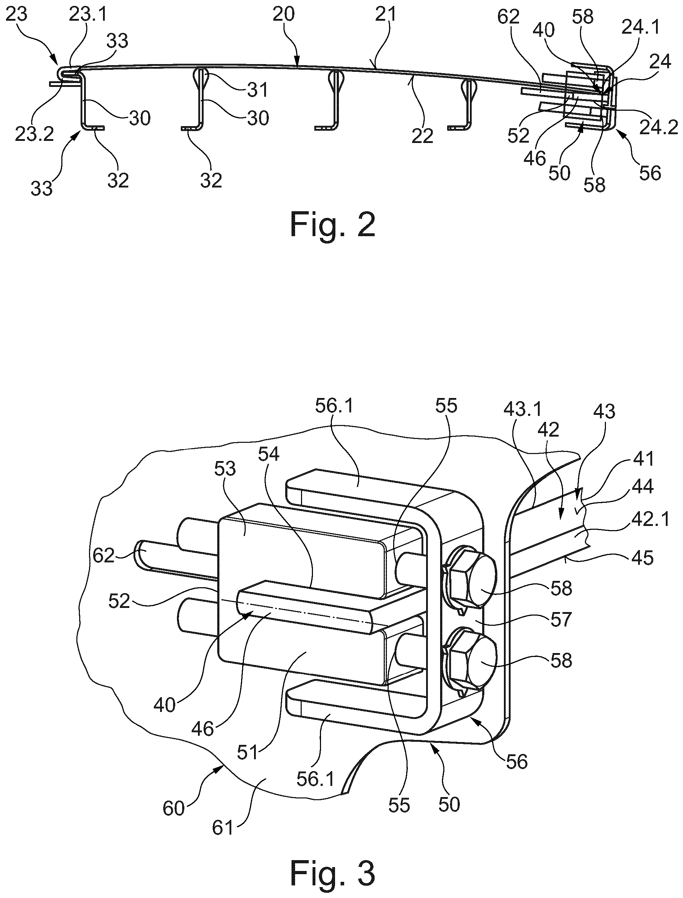

Die Siebvorrichtung dient dazu wenigstens zwei Fraktionen aus dem zugeführten Material auszusieben. Zu diesem Zweck weist die Siebvorrichtung wenigstens einen Siebbelag 20 auf, wie dies Figur 2 zeigt.

Figur 1 veranschaulicht weiter, dass der Siebkasten 60 Seitenwände 61 aufweist, die in Sieblängsrichtung verlaufen.

Der Siebkasten 60 kann mittels Federelementen 63 an einem stationären Siebkastenträger 64 montiert sein. Mittels eines Antriebs 65 kann der Siebkasten 60 in Schwingung versetzt werden, um das Material zu sieben.

Der Siebvorrichtung ist wenigstens ein Abführband 14.1, 14.2 oder wenigstens ein Feinkorn- oder Haldenband 15 zugeordnet. Im vorliegenden Ausführungsbeispiel sind zwei Abführbänder 14.1, 14.2 und ein Feinkorn- oder Haldenband 15 verwendet. Entsprechend sind in der Siebvorrichtung zwei Siebbeläge 20 verbaut.

Das zu siebende Material wird auf den oberen Siebbelag 20 aufgegeben. Das Material, welches durch den oberen Siebbelag 20 hindurchfällt, gelangt auf den darunterliegenden Siebbelag 20. Material, welches nicht durch den oberen Siebbelag 20 hindurchfällt, gelangt auf eines der beiden Abführbänder 14.1, 14.2. Das Material, welches nicht durch den zweiten Siebbelag 20 fällt, gelangt auf das zweite Abführband 14.1, 14.2. Das Material, welches in Form von Feinkorn-Material durch beide Siebbeläge 20 hindurchfällt, gelangt auf das Feinkorn- oder Haldenband 15. Die beiden Abführbänder 14.1, 14.2 und das Feinkorn- oder Haldenband 15 fördern die ihnen zugeführten Kornfraktionen jeweils auf Halden 16.

Figur 2 zeigt in schematischer Darstellung einen Ausschnitt der Siebvorrichtung. Wie die Darstellung veranschaulicht, sind in dem Siebkasten 60 Stützelemente 30 verbaut, die den Siebbelag 20 stützen. Die Stützelemente 30 besitzen einen Befestigungsfuß 32, mit dem sie ortsfest im Siebkasten 60 fixiert sind. Gegenüberliegend dem Befestigungsfuß 32 sind einseitig Dämpfungselemente 31 auf die Stützelemente 30 auswechselbar aufgesetzt. Die Dämpfungselemente 31 stützen den Siebbelag 20 im Bereich der Siebunterseite 22.

Die Stützelemente 30 können mit ihren Dämpfungselementen 31 so angeordnet und ausgerichtet sein, dass der auf den Dämpfungselementen 31 aufsitzende Siebbelag 20 eine bogenförmige Kontur in Sieblängsrichtung bildet, wie Figur 2 zeigt.

Das in Figur 2 linksseitige Stützelement 30 besitzt an seinem dem Befestigungsfuß 32 abgewandten Ende einen Halteransatz 33. Der Siebbelag 20 ist mit einem Befestigungsrand 23 auswechselbar an dem Halteransatz 33 gehalten.

Der Siebbelag 20 ist als Flächenelement ausgebildet und weist gegenüberliegend der Siebunterseite 22 eine Sieboberseite 21 auf. Es kann so sein, dass der Befestigungsrand 23 von einem Endabschnitt 23.1 des Siebbelages 20 abgekantet ist, um eine Abwinklung 23.2 zu bilden. In diese Abwinklung 23.2 greift der Halteansatz 33 ein.

An dem dem Befestigungsrand 23 abgewandten Ende besitzt der Siebbelag 20 einen weiteren Befestigungsrand 24, der im Wesentlichen baugleich wie der Befestigungsrand 23 ausgebildet sein kann. Entsprechend ist von dem Siebbelag 20 an dem gegenüberliegenden Endabschnitt 24.1 eine Abwinklung 24.2 abgebogen.

Der Siebbelag 20 muss im Siebkasten 60 in Längsrichtung (also in Figur 2 von links nach rechts) gespannt werden. Zu diesem Zweck wird ein Siebspanner 40 eingesetzt. Der Siebspanner 40 ist vorzugsweise im Querschnitt im Wesentlichen rechteckig ausgebildet ist. Der Siebspanner 40 kann mithin eine stabförmige Geometrie aufweisen.

Der Siebspanner 40 besitzt einen zentralen Spannabschnitt 41, der sich zwischen zwei endseitigen Befestigungsabschnitten 46 erstreckt.

Der Spannabschnitt 41 besitzt an seinen gegenüberliegenden Längsseiten Spannvorsprünge 42, 43. Der erste Spannvorsprung 42 weist eine erste Spannkante 42.1 auf. Der zweite Spannvorsprung 43 besitzt eine zweite Spannkante 43.1.

Die erste Spannkante 42.1 verläuft konvex gewölbt zwischen den beiden Befestigungsabschnitten 46.

Im gezeigten Ausführungsbeispiel greift der Siebspanner 40 mit seinem ersten Spannvorsprung 42 in die in Figur 2 gezeigte rechtsseitige Abwinklung 24.2 ein. Dabei liegt der Siebspanner 40 mit seiner ersten Spannkante 42.1 an dem sich durch die Abwinklung 24.2 ergebenden Bodenabschnitt 42.3 unterhalb der Siebunterseite 22 an. Somit ist der Spannvorsprung 42 zwischen der Siebunterseite 22 und der Abwinklung 24.2 zumindest teilweise eingefasst.

Der Siebspanner 40 greift an gegenüberliegenden Seiten mit seinen Befestigungsabschnitten 46 durch Durchführungen 62 in den zugeordneten Seitenwänden 61 des Siebkastens 60 hindurch, wie Figur 3 anschaulich zeigt. Entsprechend stehen die Befestigungsabschnitte 46 außenseitig über die Seitenwände 61 des Siebkastens 60 vor. Im Bereich der Durchführungen 62 des Siebkastens 60 sind Spannvorrichtungen 50 angeordnet, mit denen der Siebspanner 40 in Spannrichtung längs seiner Mittelquerebene verstellt werden kann.

Die Spannvorrichtungen 50 besitzen jeweils ein stationäres Stützlager 56, das vorzugsweise mit der Seitenwand 61 fest verbunden, beispielsweise verschweißt, ist.

Das Stützlager 56 kann so ausgebildet sein, dass es einen Halter 57 aufweist, an den wenigstens ein Lagerstück 56.1 angeschlossen, vorzugsweise angeformt, ist. Mittels der beiden Lagerstücke 56.1 und dem Halter 57 kann das Stützlager 56 stabil mit der zugeordneten Seitenwand 61 verbunden werden. Die Spannvorrichtung 50 weist weiterhin ein Spannstück 52 auf, mittels dem der Siebspanner 40 formschlüssig hintergriffen ist, um ihn in Spannrichtung zu verschieben. Dabei kann es so sein, dass an das Spannstück 52 an gegenüberliegenden Seiten Schenkel 51, 53 angeschlossen, vorzugsweise angeformt, sind.

Zwischen den Schenkeln 51, 53 ergibt sich eine Aufnahme 54 für den Siebspanner 40. Der Schenkel 53 übergreift die Oberseite 44 und der Schenkel 51 die Unterseite 45 des Siebspanners 40, sodass ein Ausweichen des Siebspanners 40 in diese Richtungen verhindert wird, wenn er gespannt wird.

Zur Verstellung des Spannstücks 52 in Spannrichtung ist wenigstens eine Spannschraube 58 verwendet, mittels der das Spannstück 52 stufenlos verstellt werden kann. Dabei stützt sich die Spannschraube 58 am Halter 57 ab. Über eine Gewindeverbindung kann die stufenlose Verstellung des Spannstück 52 bewirkt werden.

Im vorliegenden Ausführungsbeispiel weist jeder der Schenkel 51, 53 eine Gewindeaufnahme 55 auf. Der Halter 57 besitzt zwei Durchführungen, durch die die Spannschrauben 58 hindurchgesetzt und in die Gewindeaufnahmen 55 eingeschraubt sind.

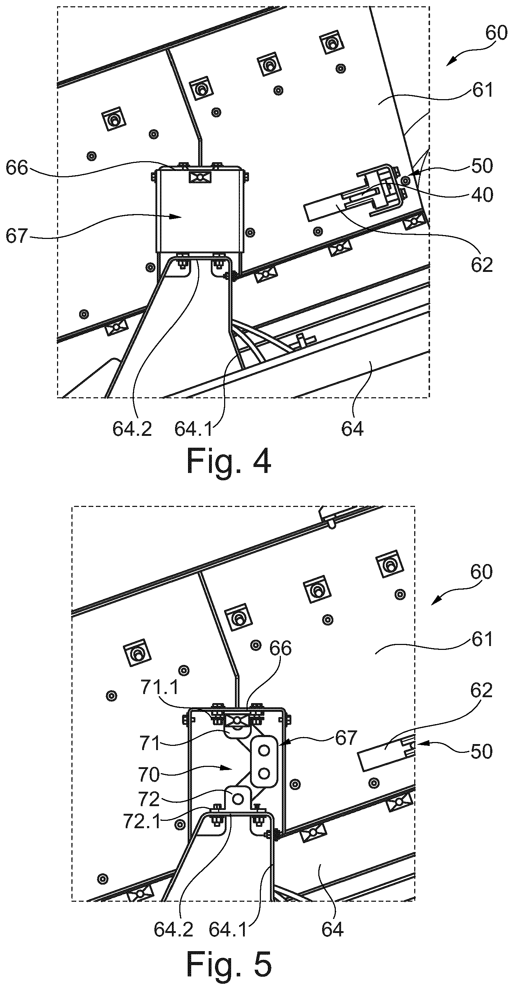

Figur 4 veranschaulicht, dass der Siebkastenträger 64 wenigstens einen Halter 64.1 aufweist. Vorzugsweise sind Halter 64.1 an gegenüberliegenden Seiten des Siebkastens 60 angeordnet.

Die Halter 64.1 besitzen einen Befestigungsabschnitt 64.2, der im Bereich 67 der Seitenwand 61 des Siebkastens 60 angeordnet ist.

Gegenüberliegend dem Befestigungsabschnitt 64.2 des Siebkastenträgers 64 besitzt der Siebkasten 60 einen Stützabschnitt 66. Während des Betriebseinsatzes bewegt sich der Siebkasten 60 aufgrund der Vibrationsbewegungen relativ zum Siebkastenträger 64, sodass sich auch der Stützabschnitt 66 relativ zu dem Befestigungsabschnitt 64.2 bewegt.

Figur 5 veranschaulicht, dass zwischen dem Befestigungsabschnitt 64.2 und dem Stützabschnitt 66 ein Schwingungsdämpfer 70 eingebaut ist. Dabei ist der Schwingungsdämpfer 70 im Bereich 67 der Seitenwand 61 angeordnet.

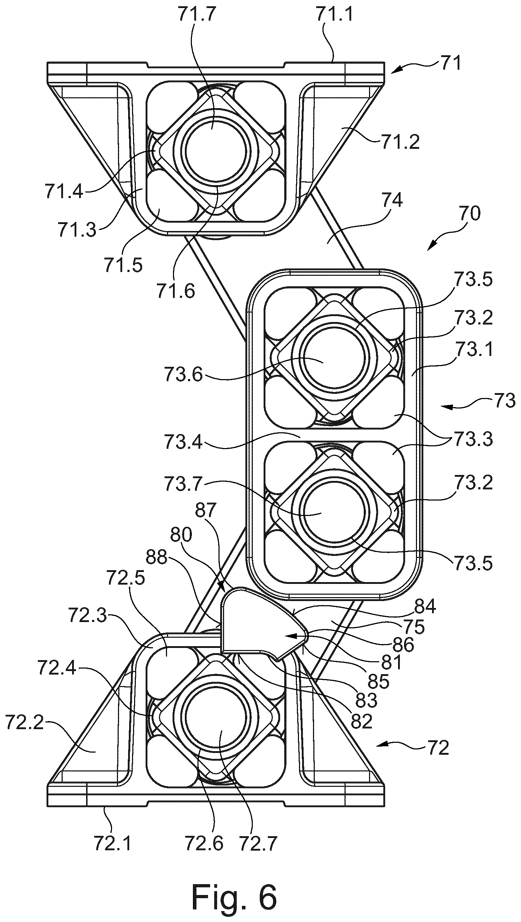

Figur 6 veranschaulicht den Aufbau des Schwingungsdämpfers 70. Wie diese Darstellung veranschaulicht, besitzt der Schwingungsdämpfer 70 zwei Koppelstücke 71, 72.

Das Koppelstück 71 verbindet den Schwingungsdämpfer 70 mit dem Stützabschnitt 66 des Siebkasten 60. Das Koppelstück 72 verbindet den Schwingungsdämpfer 70 mit dem Befestigungsabschnitt 64.2 des Halters 64.1.

Zwischen den beiden Koppelstücken 71, 72 ist ein Dämpfungsmechanismus mit einem Dämpfungskörper 73 wirksam, der die Schwingungen des Siebkastens 60 dämpft.

Das Koppelstück 71, 72 besitzt einen Befestigungsflansch 71.1, 72.1. Mittels des Befestigungsflansches 71.1, 71.2 kann das Koppelstück 71, 72 mit dem Stützabschnitt 66 bzw. dem Befestigungsabschnitt 64.2 verbunden werden.

Es kann so sein, dass das Koppelstück 71, 72 einen Hohlkörper 71.3, 72.3 aufweist. Der Hohlkörper 71.3, 72.3 umgibt einen Hohlraum. In dem Hohlraum des Hohlkörpers 71.3, 72.3 ist ein Drehkörper 71.4, 72.4 angeordnet, der beispielsweise von einem mehreckigen Hohlprofil, beispielsweise einem Vierkant-Hohlprofil, gebildet sein kann, wie dies Figur 6 zeigt. An den Seiten des Drehkörpers 71.4 sind Dämpfungselemente 71.5, 72.5 in den Hohlkörper 71.3, 72.3 eingesetzt. Dabei dienen die Dämpfungselemente 71.5, 72.5 zur Dämpfung der Drehbewegung des Drehkörpers 71.4, 72.4 gegenüber dem Hohlkörper 71.3, 72.3. Somit wird eine Drehbewegung des Drehkörpers 71.4, 72.4 gedämpft und die Dämpfungselemente 71.5, 72.5 erzeugen gleichzeitig eine Rückstellkraft, um den Drehkörper 71.4, 72.4 in eine neutrale Lage zurückzustellen, nachdem dieser ausgelenkt wurde.

Der Drehkörper 71.4, 72.4 besitzt ein Lagerstück 71.6, 72.6. An dem Lagerstück 71.6, 72.6 kann ein Dämpfungshebel 74, 75 mittels eines Lagerstücks 71.7, 72.7, drehfest gelagert werden.

Vorzugsweise ist es so, dass die beiden Koppelstücke 71, 72 baugleich ausgebildet sind, wie dies die Zeichnungen zeigen.

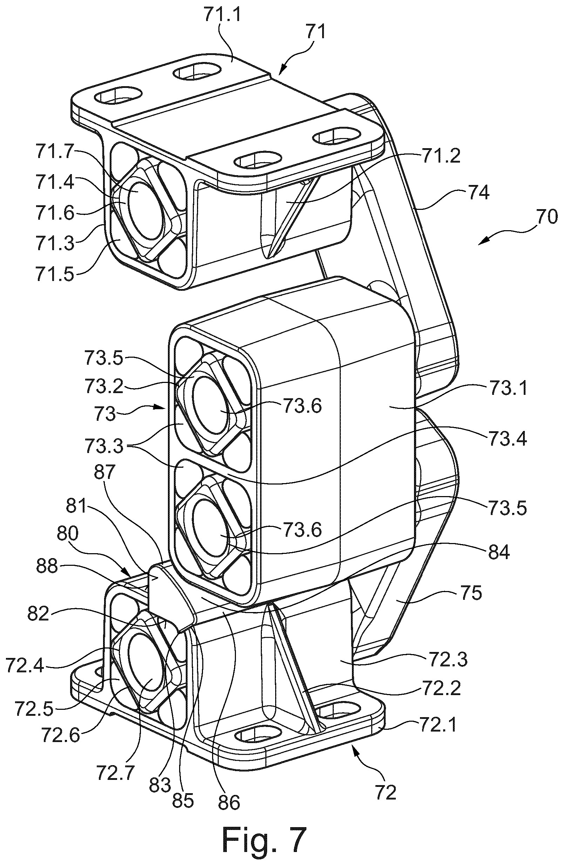

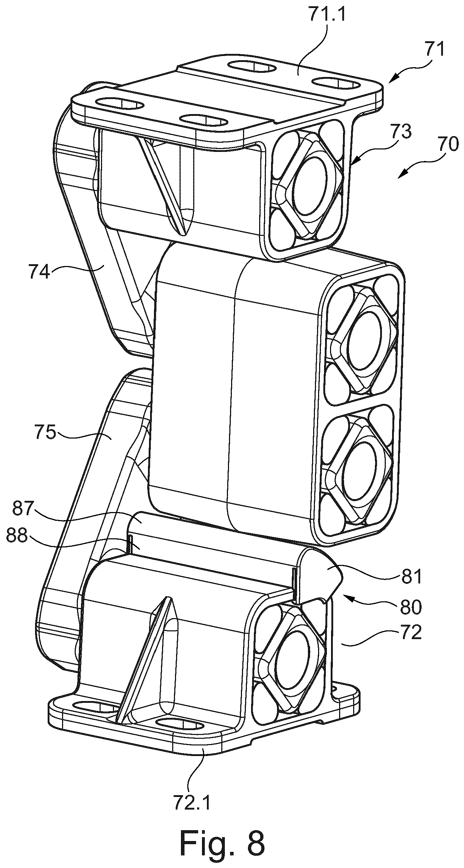

Zur Verbesserung der Steifigkeit der Koppelstücke 71, 72 kann es vorgesehen sein, dass der Hohlkörper 71.3, 72.3 mittels Verstärkungselementen 71.2, 72.2 gegenüber dem Befestigungsflansch 71.1, 72.1 seitlich abgestützt ist. Die Verstärkungselemente 71.2, 72.2 können in Form von Versteifungsrippen ausgebildet sein, wie Figur 7 oder Figur 8 deutlicher zeigen.

Figur 6 veranschaulicht weiter, dass der Schwingungsdämpfer 70 einen Träger 73.1 aufweist, der zwei Hohlkammern bildet. In den Hohlkammern sind Drehkörper 73.2 angeordnet. Ähnlich wie bei den Koppelstücken 71, 72 sind die Drehkörper 73.2 wieder mittels Dämpfungselementen 73.3 in Umfangsrichtung gegenüber dem Träger 73.1 abgestützt. Auch damit kann wieder eine Dämpfung der Drehbewegung der Drehkörper 73.2 bzw. eine Rückstellung der Drehkörper 73.2 in die in Figur 6 gezeigte neutrale Position erreicht werden.

Wie die Darstellungen veranschaulichen, kann es so sein, dass der Träger 73.1 als Hohlprofil ausgebildet ist, der die beiden Hohlkammern bildet. Die Hohlkammern können mittels eines Trennstegs 73.4 voneinander getrennt sein.

Die Drehkörper 73.2 können wieder Lagerstücke 73.5 aufweisen. An den Lagerstücken 73.5 sind die beiden Dämpfungshebel 74, 75 jeweils wieder mit einem Lagerelement 73.7 drehfest gelagert.

Wenn nun der Siebkasten 60 während des Betriebseinsatzes in Schwingung versetzt wird, so ändert sich der vertikale Abstand zwischen dem Stützabschnitt 66 und dem Befestigungsabschnitt 64.2. Dadurch werden die Koppelstücke 71, 72 in vertikaler Richtung gegeneinander verstellt. Diese Verstellung bewirkt eine Schwenkbewegung der Dämpfungshebel 74, 75. Die Schwenkbewegung wird mit den Dämpfungselementen 71.5, 72.5 und 73.3 gedämpft.

Im Abstandsbereich der Außenkontur der Koppelstücke 71, 72 und der Außenkontur des Dämpfungskörper 73 sind Spaltbereiche gebildet. Wenigstens einer der Spaltbereiche ist zumindest bereichsweise mittels eines mit dem Koppelstück 71, 72 oder dem Dämpfungselement 73 verbundenen Füllstücks 80 überbrückt. In Figur 6-8 ist nur ein Füllstück 80 dargestellt. Selbstverständlich können jedoch auch an beiden Spaltbereichen Füllstücke vorgesehen sein.

Die Füllstücke 80 dienen dazu einen Zugriff eines Benutzers auf den Spaltbereich zwischen dem Koppelstück 71, 72 und dem Dämpfungskörper 73 zu verhindern. Somit kann sich ein Benutzer die Finger in diesem Spaltbereich nicht verklemmen.

Wie die Darstellungen erkennen lassen, weist das Füllstück 80 einen Basiskörper 81 auf. Dieser Basiskörper 81 bildet eine Befestigungsfläche 82. Mit dieser Befestigungsfläche 82 ist der Basiskörper 61 auf eine Außenfläche des Koppelstücks 71, 72 bzw. des Dämpfungskörpers 73 aufgesetzt.

Vorzugsweise ist das Füllstück 80 mittels einer stoffschlüssigen Verbindung im Bereich der Befestigungsfläche 82 mit dem Koppelstück bzw. dem Dämpfungskörper 73 verbunden.

Es kann so sein, dass die Befestigungsfläche 82 in eine abgewinkelte oder konkave Formschlussfläche 83 übergeht. Diese Formschlussfläche 83 umgreift eine korrespondierende Körperkante des Koppelstücks 71, 72 oder des Dämpfungskörpers 70. Hierdurch wird eine exakte Ausrichtung des Füllstücks 80 möglich. Zudem sichert die Formschlussfläche 83 die Lage des Füllstücks 80 während des Betriebseinsatzes in Bewegungsrichtung der Dämpfungshebel 74, 75 zusätzlich formschlüssig.

Wie die Zeichnungen erkennen lassen, besitzt das Füllstück 80 eine äußere Schutzfläche 84, die dem Dämpfungskörper 73 oder dem Koppelstück 71, 72 unter Bildung eines Spalts gegenübersteht. Der Spalt ist so dimensioniert, dass ein Benutzer nicht in diesen eingreifen kann, sodass ein Einklemmen eines Fingers verhindert ist.

Vorzugsweise ist die Schutzfläche 84 zumindest bereichsweise konvex ausgebildet. Dabei ist die Geometrie der Schutzfläche 84 auf die Bewegungskinematik des Dämpfungskörpers 73 ausgelegt. Somit kann über den gesamten Bewegungsbereich des Dämpfungskörpers 73 ein Spaltbereich beibehalten werden, der ein Einklemmen eines Fingers verhindert.

Frontseitig geht die Schutzfläche 84 über einen Rundungsübergang 86 in eine Frontfläche 85 über. Entgegengesetzt geht die Stützfläche 84 über einen Rundungsübergang 87 in eine Rückfläche 88 über, wie dies insbesondere Figur 6 anschaulich zeigt.

## Patentansprüche

1. Siebmaschine (10) zum Sieben und Klassieren von mineralischem Stückgut, insbesondere Gesteinsmaterial, oder Recyclingmaterial mit einem Chassis (11), an dem ein Siebträger, insbesondere ein Siebkasten (60) befestigt ist, wobei an dem Siebträger wenigstens ein Siebbelag (20) auswechselbar befestigt ist, wobei zwischen dem Siebträger und dem Maschinenchassis (11) wenigstens ein Schwingungsdämpfer (70) wirksam ist, wobei der Schwingungsdämpfer (70) zwei Koppelstücke (71, 72) aufweist, wobei ein Koppelstück (72) mit dem Maschinenchassis (11) und das andere Koppelstück (71) mit dem Siebträger mittelbar oder unmittelbar verbunden ist, wobei mit beiden Koppelstücken (71, 72) jeweils ein Dämpfungshebel (74, 75) schwenkbar verbunden ist, wobei die Dämpfungshebel (74, 75) jeweils den Koppelstücken (71, 72) abgekehrt an einen Dämpfungskörper (73) angekoppelt sind, wobei im Abstandsbereich zwischen den Koppelstücken (71, 72) und dem Dämpfungskörper (73) jeweils ein Spaltbereich gebildet ist, und wobei wenigstens einer der Spaltbereiche zumindest bereichsweise mittels eines mit dem Koppelstück (71, 72) oder dem Dämpfungselement (73) verbundenen Füllstücks (80) überbrückt ist.

2. Siebmaschine nach Anspruch 1, **dadurch gekennzeichnet, dass** das Füllstück (80) einen Basiskörper (81) aufweist, dass der Basiskörper (81) eine Befestigungsfläche (82) aufweist, und dass der Basiskörper (81) mittels der Befestigungsfläche (82) auf einer dem Dämpfungskörper (73) gegenüberstehenden Seitenfläche des Koppelstücks (71, 72) oder einer dem Koppelstück (71, 72) gegenüberstehenden Seitenfläche des Dämpfungskörpers (73) befestigt, insbesondere stoffschlüssig, befestigt ist.

3. Siebmaschine nach Anspruch 2, **dadurch gekennzeichnet, dass** die Befestigungsfläche (82) des Füllstücks (80) in eine konkave Formschlussfläche (83) übergeht, die eine an die Seitenfläche des Koppelelements (71, 72) oder des Dämpfungselements (73) anschließende konvexen Rundungsabschnitt zumindest bereichsweise umgreift.

4. Siebmaschine (10) nach einem der Ansprüche 1 bis 3, **dadurch gekennzeichnet, dass** das Füllstück (80) eine konvexe Schutzfläche (84) aufweist, die dem Dämpfungskörper (73) oder dem Koppelstück (71,72) gegenübersteht.

5. Siebmaschine (10) nach Anspruch 4, dadurch gegenzeichnet, dass sich die Schutzfläche im Wesentlichen in Richtung der Schwenkachse des Dämpfungshebels (74, 75) erstreckt.

6. Siebmaschine (10) nach Anspruch 4 oder 5, **dadurch gekennzeichnet, dass** in Dämpfungsrichtung des Dämpfungshebels (74, 74) vor der Schutzfläche (84) eine Frontfläche (85) angeordnet ist, die sich im Wesentlichen in Richtung der Schwenkachse des Dämpfungshebels (74, 75) erstreckt und die mittels eines Rundungsübergangs (86) in die Schutzfläche (84) übergeleitet ist.

7. Siebmaschine nach einem der Ansprüche 4 bis 6, **dadurch gekennzeichnet, dass** in Dämpfungsrichtung des Dämpfungshebels (74, 74) hinter der Schutzfläche (84) eine Rückfläche (88) angeordnet ist, die sich im Wesentlichen in Richtung der Schwenkachse des Dämpfungshebels (74, 75) erstreckt und die mittels eines Rundungsübergangs (87) in die Schutzfläche (84) übergeleitet ist.

8. Siebmaschine nach einem der Ansprüche 4 bis 7, **dadurch gekennzeichnet, dass** zwischen der Schutzfläche (84) und einer gegenüberliegenden Seitenfläche des Dämpfungskörpers (73) oder des Koppelstücks (71, 72) ein Abstandsbereich gebildet ist, wobei vorzugsweise vorgesehen ist, dass der Abstandsbereich über einen wesentlichen Teil der Schwenkbewegung des Dämpfungshebels (74, 75) mit gleichem oder veränderlichen Abstand beibehalten wird oder dass über die gesamte Schwenkbewegung des Dämpfungshebels (74, 75) der Abstandsbereich mit gleichem oder veränderlichem Abstand beibehalten wird.

9. Siebmaschine nach einem der Ansprüche 1 bis 8, **dadurch gekennzeichnet, dass** wenigstens eines der Koppelstücke (71, 72) einen Hohlkörper (71.3) aufweist, in dem ein Drehkörper (71.4) schwenkbar angeordnet ist, dass der Drehkörper (71.4) ein Lagerstück (71.6) trägt oder aufweist, das den Dämpfungshebel (74, 75) aufnimmt, und dass in den Hohlkörper (71.3) Dämpfungselemente (71.5) eingesetzt sind, die den Hohlkörper (71.3) gegenüber dem Drehkörper (71.4) in Umfangsrichtung formschlüssig abstützen.

10. Siebmaschine (10) nach einem der Ansprüche 1 bis 9, **dadurch gekennzeichnet, dass** der Dämpfungskörper (73) einen Träger (73.1) aufweist, der zwei Hohlkammern aufweist, dass in jeder Hohlkammer jeweils ein Drehkörper (73.2) schwenkbar aufgenommen ist, dass die Drehkörper (73.2) jeweils ein Lagerstück (73.5) tragen oder aufweisen, dass an den Lagerstücken (73.5) jeweils ein Dämpfungshebel (74, 75) befestigt ist und dass in den Hohlkammern Dämpfungselemente (73.3) eingesetzt sind, die den Träger gegenüber den Drehkörpern (73.2) in Umfangsrichtung formschlüssig abstützen.

11. Siebmaschine nach einem der Ansprüche 1 bis 10, **dadurch gekennzeichnet, dass** wenigstens einer der Spaltbereiche derart mittels des mit dem Koppelstück (71, 72) oder dem Dämpfungselement (73) verbundenen Füllstücks (80) überbrückt ist, dass die verbleibende Spaltbreite des nicht von dem Füllstück (80) überbrückten Spaltabschnitts maximal 15mm, vorzugsweise maximal 10mm, beträgt.
